# FASCICULE DE BREVET EUROPEEN

(11) **EP 1 131 772 B1**
(45) Date de publication et mention de la délivrance du brevet: **25.09.2002**
(21) Numéro de dépôt: 99950804.7
(22) Date de dépôt: 21.10.1999
(51) Int. Cl.: G06K 7/00, H04L 12/403

(54) **PROCEDE DE TRANSMISSION NUMERIQUE**
VERFAHREN ZUR DIGITALEN ÜBERTRAGUNG
DIGITAL TRANSMISSION METHOD

(30) Priorité: 18.11.1998 FR 9814492
(43) Date de publication de la demande: 12.09.2001
(73) Titulaire: GEMPLUS, 13881 Gémenos Cédex (FR)
(72) Inventeur: GUTERMAN, Pascal, Lascours, 13360 Roquevaire (FR)
(86) Numéro de dépôt international: FR9902559
(87) Numéro de publication internationale: WO00030017

(56) Documents cités:
- EP-A- 0 355 607
- US-A- 5 267 243
- US-A- 5 479 441

## Description

L'invention concerne les systèmes et procédés de transmission numérique et, plus particulièrement, un procédé ou mode de transmission numérique qui peut être mis en oeuvre pour la transmission de données entre deux équipements, par exemple entre une carte à puce électronique et un terminal de lecture.

Il existe deux modes de transmission ou de communication numérique entre des équipements, par exemple du type informatique, l'un dit "synchrone" et l'autre dit "asynchrone".

Dans le cas de la transmission synchrone, les données élémentaires sont accolées les unes aux autres et sont transmises sans interruption au rythme d'un signal d'horloge de transmission. Le début et la fin d'un ensemble de données élémentaires sont repérés par une succession caractéristique de transitions d'états logiques qui s'effectue au rythme du signal d'horloge.

Il n'y a donc pas, pour chaque donnée élémentaire, de signal de synchronisation, ni de signal de contrôle.

Dans le cas de la transmission asynchrone, les données sont transmises individuellement et contiennent l'information à transmettre, des signaux de synchronisation et des signaux de contrôle.

Les signaux de synchronisation sont constitués habituellement d'un bit de début de l'élément de transmission et d'un ou deux bits de fin de l'élément de transmission unitaire. Les signaux de contrôle sont constitués habituellement de bits de redondance associés à la donnée élémentaire.

Le temps séparant deux données élémentaires consécutives est variable.

Pour une même fréquence de transmission des bits de données, la transmission asynchrone est plus lente que la transmission synchrone du fait de la présence de signaux de synchronisation et de contrôle et de temps mort éventuel entre deux données élémentaires consécutives. Mais la communication synchrone nécessite la transmission de signaux d'horloge de données, signaux qui ne sont pas toujours disponibles sur les canaux de communication des équipements informatiques.

Par ailleurs, dans le cas de la carte à puce à transmission asynchrone, les signaux de contrôle qui sont utilisés actuellement, contrôle de parité par exemple, présentent un risque de ne pas détecter certaines erreurs de transmission susceptibles de se produire dans le cas de cartes à puce car il est possible que deux erreurs de même nature se compensent.

Un but de la présente invention est donc de proposer un procédé de transmission numérique qui ne présente pas les inconvénients des procédés de transmission numérique de l'art antérieur, notamment ceux mis en oeuvre par la transmission de données entre une carte à puce électronique et un terminal de lecture auquel la carte est susceptible d'être en relation, avec ou sans contact.

L'invention concerne un procédé de transmission de données entre un équipement dit "de référence" et un équipement dit "suiveur", tels qu'une carte à microcircuit et un terminal de lecture/écriture de ladite carte, caractérisé en ce qu'il comprend les étapes suivantes consistant à
a) grouper, dans un équipement émetteur, les données élémentaires d'un message à transmettre sous forme d'une série d'au moins une donnée élémentaire constituée d'au moins une suite de signaux numériques élémentaires,
b) transmettre à un équipement informatique récepteur ladite série de données élémentaires en la faisant précéder de signaux de synchronisation qui constituent, avec la série de données élémentaires, une trame, les caractéristiques de durée et de position des signaux numériques élémentaires de chaque donnée élémentaire et des signaux de synchronisation étant spécifiques de l'équipement de référence et sont connues de l'équipement suiveur.

Le procédé défini ci-dessus peut être complété par une étape (c) consistant à :
- transmettre à l'équipement récepteur des signaux de contrôle des données transmises qui sont constitués de signaux numériques élémentaires.

Le procédé est également prévu pour interrompre la transmission des signaux numériques élémentaires pendant un intervalle de temps séparant deux données élémentaires consécutives, ledit intervalle de temps ayant une durée qui est spécifique de l'équipement de référence.

Cet intervalle de temps ou fenêtre peut être utilisé pour transmettre pendant ledit intervalle de temps au moins un signal de signalisation indiquant la fin de transmission d'une série de données élémentaires, ledit signal de signalisation de fin de transmission d'une série de données élémentaires ayant des caractéristiques de durée et de position dans l'intervalle de temps qui sont spécifiques de l'équipement de référence.

L'intervalle de temps ou fenêtre peut être utilisé pour transmettre, de l'équipement récepteur vers l'équipement informatique émetteur, un signal de signalisation, dit de contrôle de flux de données, ledit signal de contrôle de flux de données ayant des caractéristiques de durée et de position dans ledit intervalle de temps qui sont spécifiques de l'équipement de référence.

Le nombre de données élémentaires qui sont groupées pour la transmission est variable d'une trame à la suivante.

Chacun des signaux numériques élémentaires d'une donnée a une durée qui est spécifique de l'équipement de référence.

Les signaux numériques élémentaires d'une donnée ont des positions relatives les uns par rapport aux autres qui sont spécifiques de l'équipement de référence.

D'autres caractéristiques et avantages de la présente invention apparaîtront à la lecture de la description suivante d'un exemple particulier de réalisation de l'invention, ladite description étant faite en relation avec les dessins joints dans lesquels:
- la figure 1 est un schéma montrant la composition ou format d'une trame de transmission numérique selon l'invention,
- la figure 2 est un schéma montrant une forme particulière des signaux de synchronisation de trame,
- la figure 3 est un schéma montrant une composition des signaux de données et des codes de contrôle des données ainsi que le signal de signalisation de fin de trame quand il existe, et
- _la figure 4 est un schéma montrant une autre composition des signaux de données ainsi que le signal de signalisation de contrôle de flux de données par l'équipement récepteur.

L'invention sera décrite dans son application à une carte à microcircuit, également appelée carte à puce électronique, qui est susceptible de communiquer avec un terminal, tel qu'un distributeur de billets de banque, par l'intermédiaire de signaux numériques transmis par des liaisons galvaniques, radioélectriques, inductives ou optiques. Cependant, elle s'applique à toute communication ou transmission de signaux numériques entre deux équipements.

Dans la suite de la description, la carte à microcircuit sera appelée "équipement de référence" tandis que le terminal sera appelé "équipement suiveur" pour indiquer que le terminal communique avec la carte à microcircuit selon un mode ou procédé imposé par cette dernière qui constitue la "référence".

Il est à remarquer que le terminal et la carte à microcircuit sont tour à tour équipement émetteur et équipement récepteur et partagent un même signal d'horloge fourni par le terminal.

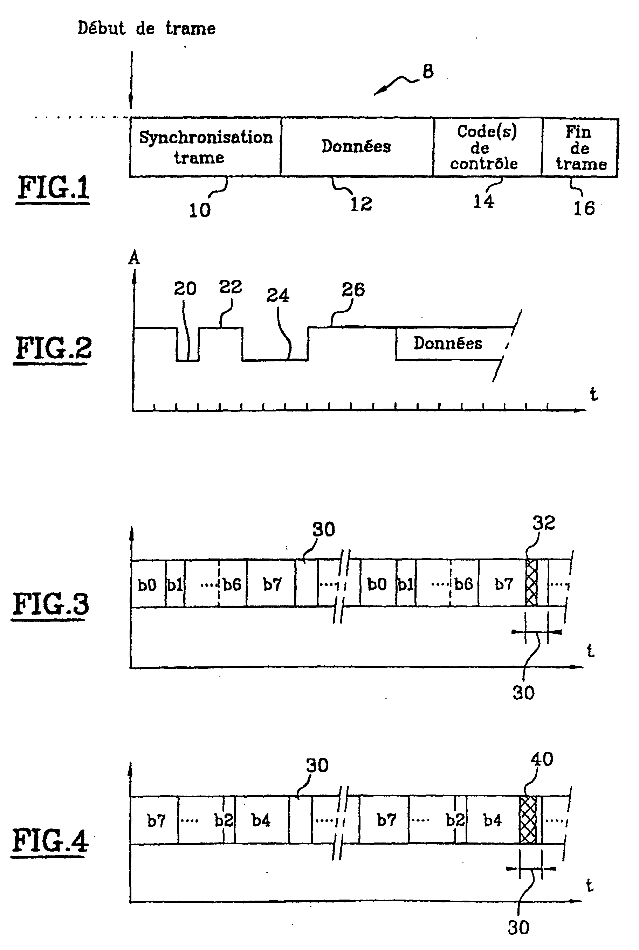

Le procédé ou mode de transmission de signaux numériques selon l'invention est caractérisé par une suite de trames, chaque trame 8 ayant, par exemple, la composition ou le format montré sur la figure 1. Ainsi, chaque trame comprend successivement, du début à la fin, des signaux de synchronisation de trame 10, des signaux de données 12, des signaux de code(s) de contrôle des données 14 et un signal de fin de trame 16.

Les signaux de codes de contrôle de données 14 peuvent être semblables aux signaux de données dans leur présentation.

Une forme particulière des signaux de synchronisation de trame 10 est représentée sur la figure 2. Elle comprend une suite de signaux rectangulaires 20, 22, 24 et 26 constitués d'une succession de flancs montants et descendants. Ces flancs sont séparés par des intervalles de temps de durées déterminées et égaux à un cycle d'horloge pour 20, deux cycles d'horloge pour 22, trois cycles d'horloge pour 24 et un nombre constant pour 26. Les cycles d'horloge sont représentés sur l'axe du temps t tandis que l'amplitude A des flancs est représentée en ordonnées.

Cette forme particulière des signaux de synchronisation est une caractéristique de la trame et de la carte à puce électronique en réception pour lui permettre de se synchroniser en vue d'analyser les signaux de données qui suivent.

L'analyse de ces signaux de synchronisation dans une fenêtre de réception correspondant à leur durée totale permet au récepteur de déterminer son décalage par rapport à un instant d'origine et d'en déduire la durée le séparant de la réception de la première donnée.

La synchronisation peut être obtenue par d'autres procédés tels que l'émission par l'émetteur d'un premier signal de synchronisation et en réponse du récepteur, après une durée variable, un signal indiquant à l'émetteur une durée convenue le séparant de la réception de sa première donnée.

L'avantage du premier procédé est d'éviter l'émission par le récepteur d'un signal en retour. Par ailleurs, dans le deuxième procédé, certains équipements d'émission ne peuvent pas garantir avec suffisamment de précision le délai à la fin duquel la première donnée sera transmise après réception du signal de retour.

Les signaux de données ainsi que les signaux de codes de contrôle de données sont représentés sur le schéma de la figure 3 à titre d'exemple particulier.

Les données élémentaires et les codes de contrôle de données comprennent, par exemple, chacun huit bits b0 à b7 formant un octet, les bits de chaque octet peuvent être rangés dans cet ordre ou suivant l'ordre montré sur la figure 4 ou tout autre ordre.

Les durées affectées aux bits des octets peuvent être différentes d'un bit à l'autre et constituent une autre caractéristique de la trame et de la carte à puce électronique (équipement de référence) dans la mesure où ces durées sont les mêmes d'un octet à l'autre pour un bit donné. Le nombre N d'octets ou de données est variable d'une trame à la suivante de sorte que les trames sont de durée variable.

Dans les intervalles de durée des bits, le signal de la valeur "1" ou "0" du bit n'est présent que pendant un temps déterminé et à une position déterminée dans cet intervalle.

Le nombre N d'octets des signaux de contrôle de données est également variable selon les applications et le type de contrôle qui est exercé.

Deux données élémentaires consécutives sont séparées par un intervalle de temps ou fenêtre 30 de durée déterminée et constante Ts qui est utilisé pour transmettre des signaux de signalisation tels qu'un signal de fin de trame 32 (figure 3) ou un signal de suspension de la réception 40, dit de contrôle de flux de données, (figure 4) connu sous le vocable Xoff. Ces deux signaux 32 et 40 ont des positions précises dans cet intervalle de temps 30 de manière à ne pas être confondus l'un avec l'autre.

Pour la reprise de la transmission, l'équipement récepteur transmet à l'équipement émetteur un signal de signalisation connu sous le vocable Xon.

Ce signal Xon peut être constitué, par exemple du signal de synchronisation de trame 10 ou encore d'une trame vide, c'est-à-dire sans donnée élémentaire.

Dans une des variantes de l'invention, le signal de fin de trame, situé dans l'intervalle 30, devient un signal de "non-fin de trame" ou encore de "continuation de trame", c'est-à-dire qu'il signifie qu'une donnée élémentaire supplémentaire doit être reçue.

L'invention a été décrite en montrant une transmission du terminal vers la carte à microcircuit mais elle s'applique aussi à une transmission de la carte à microcircuit vers le terminal et les caractéristiques du procédé mis en oeuvre pour chaque transmission peuvent être différentes selon le sens de transmission.

Dans l'exemple décrit, la carte à microcircuit constitue l'équipement de référence pour la transmission de données du terminal vers la carte à microcircuit mais les rôles peuvent être les mêmes ou être inversés dans le cas de la transmission de données de la carte à microcircuit vers le terminal.

## Revendications

1. Procédé de transmission de données entre un équipement de référence et un équipement suiveur, tels qu'une carte à microcircuit et un terminal de lecture/écriture de ladite carte, **caractérisé en ce qu'**il comprend les étapes suivantes consistant à :
(a) grouper, dans un équipement émetteur, les données élémentaires d'un message à transmettre sous forme d'une série d'au moins une donnée élémentaire constituée d'une suite (12) de signaux numériques élémentaires (b0,...b7)
b) transmettre à un équipement récepteur ladite série (12) de données numériques élémentaires en la faisant précéder de signaux de synchronisation (10) qui constituent, avec la série de données élémentaires, une trame (8), les caractéristiques de durée et de position des signaux numériques élémentaires (b0,...b7) de chaque donnée élémentaire et des signaux de synchronisation (20, 22, 24, 26) étant spécifiques de l'équipement de référence et sont connues de l'équipement suiveur.

2. Procédé selon la revendication 1, **caractérisé en ce qu'**il comprend une étape supplémentaire consistant à :
(c) transmettre à l'équipement récepteur des signaux de contrôle des données (14) transmises qui sont constitués de signaux numériques élémentaires.

3. Procédé selon la revendication 1 ou 2, **caractérisé en ce qu'**il comprend l'étape supplémentaire consistant à :
- interrompre la transmission des signaux numériques élémentaires pendant un intervalle de temps ou fenêtre (30) séparant deux données élémentaires consécutives, ledit intervalle de temps (30) ayant une durée qui est spécifique de l'équipement informatique de référence.

4. Procédé selon la revendication 3, **caractérisé en ce qu'**il comprend l'étape supplémentaire suivante consistant à :
- transmettre pendant ledit intervalle de temps au moins un signal de signalisation (32) indiquant la fin de transmission de la série de données élémentaires, ledit signal de signalisation de fin de transmission de la série de données élémentaires ayant des caractéristiques de durée et de position dans l'intervalle de temps qui sont spécifiques de l'équipement de référence.

5. Procédé selon la revendication 3, **caractérisé en ce qu'**il comprend l'étape supplémentaire suivante consistant à :
- transmettre, pendant ledit intervalle de temps (30), un signal de signalisation (32) indiquant la non-fin de transmission de la série de données élémentaires, ledit signal de signalisation de non-fin de transmission ayant des caractéristiques de durée et de position dans l'intervalle de temps qui sont spécifiques de l'équipement de référence.

6. Procédé selon la revendication 3, **caractérisé en ce qu'**il comprend l'étape supplémentaire suivante consistant à :
- transmettre pendant ledit intervalle de temps (30), de l'équipement informatique récepteur vers l'équipement informatique émetteur, un signal de signalisation (40) dit de contrôle de flux de données, ledit signal de signalisation de contrôle de flux de données ayant des caractéristiques de durée et de position dans ledit intervalle de temps qui sont spécifiques de l'équipement de référence.

7. Procédé selon l'une quelconque des revendications 1 à 6, **caractérisé en ce que** le nombre (N) de données élémentaires qui sont groupées pour la transmission est variable d'une trame à la suivante.

8. Procédé selon l'une quelconque des revendications précédentes 1 à 7, **caractérisé en ce que** chacun des signaux numériques élémentaires d'une donnée a une durée qui est spécifique de l'équipement de référence.

9. Procédé selon l'une quelconque des revendications précédentes 1 à 8, **caractérisé en ce que** les signaux numériques élémentaires d'une donnée ont des positions relatives les uns par rapport aux autres qui sont spécifiques de l'équipement de référence.

10. Procédé selon la revendication 8 ou 9, **caractérisé en ce que** le signal de la valeur numérique "1" ou "0" des signaux numériques élémentaires d'une donnée a une position dans l'intervalle de temps qui est spécifique de l'équipement de référence.

## Patentansprüche

1. Verfahren zur Übertragung von Daten zwischen einer Referenzausrüstung und einer Folgeausrüstung, wie zum Beispiel einer Karte mit Mikroschaltkreis und einem Lese- / Schreibterminal der besagten Karte, **dadurch gekennzeichnet, dass** es die folgenden Schritte umfasst, bestehend aus:
(a) dem Zusammenfassen der elementaren Daten einer zu übertragenden Nachricht in Form einer Serie von wenigstens einer aus einer Folge (12) von elementaren digitalen Signalen (b0, ... b7) bestehenden elementaren Dateneinheit in einer Sendeausrüstung
(b) dem Übertragen der besagten Serie (12) elementarer digitaler Daten auf eine Empfängerausrüstung, indem ersterer Synchronisationsdaten (10) vorangestellt werden, die mit der Serie elementarer Daten einen Rahmen (8) bilden, wobei die Merkmale der Dauer und der Position der elementaren digitalen Signale (b0, ... b7) jeder elementaren Dateneinheit und die Synchronisationssignale (20, 22, 24, 26) spezifisch für die Referenzausrüstung und der Nachfolgeausrüstung bekannt sind.

2. Verfahren gemäß Anspruch 1, **dadurch gekennzeichnet, dass** es eine zusätzliche Stufe beinhaltet, bestehend aus:
(c) der Übertragung von Kontrollsignalen der übertragenen Daten (14), die aus elementaren digitalen Signalen bestehen, auf die Nachfolgeausrüstung.

3. Verfahren gemäß Anspruch 1 oder 2, **dadurch gekennzeichnet, dass** es den zusätzlichen Schritt beinhaltet, bestehend aus:
- der Unterbrechung der Übertragung der elementaren digitalen Signale während eines zwei aufeinanderfolgende elementare Daten trennenden zeitlichen Intervalls oder Fensters (30), wobei besagtes zeitliches Intervall (30) eine Dauer hat, die für die IT-Referenzausrüstung spezifisch ist.

4. Verfahren gemäß Anspruch 3, **dadurch gekennzeichnet, dass** es den nachfolgenden zusätzlichen Schritt beinhaltet, bestehend aus:
- der Übertragung wenigstens eines den Abschluss der Übertragung der Serie elementarer Daten anzeigenden Signalisierungssignals (32) während des besagten zeitlichen Intervalls, wobei das besagte Übertragungsabschluss-Signalisierungssignal der Serie elementarer Daten Merkmale der Dauer und Position im zeitlichen Intervall hat, die für die Referenzausrüstung spezifisch sind.

5. Verfahren gemäß Anspruch 3, **dadurch gekennzeichnet, dass** es den nachfolgenden zusätzlichen Schritt beinhaltet, bestehend aus:
- der Übertragung eines den Nicht-Abschluss der Übertragung der Serie elementarer Daten anzeigenden Signalisierungssignal (32) während des besagten zeitlichen Intervalls (30) , wobei das besagte Signalisierungssignal des Nicht-Abschlusses der Übertragung Merkmale der Dauer und der Position im zeitlichen Intervall hat, die für die Referenzausrüstung spezifisch sind.

6. Verfahren gemäß Anspruch 3, **dadurch gekennzeichnet, dass** es die nachfolgende zusätzliche Stufe beinhaltet, bestehend aus:
- der Übertragung eines Kontrollsignal des Datenflusses genannten Signalisierungssignals (40) von der IT-Empfängerausrüstung auf die IT-Senderausrüstung während des zeitlichen Intervalls (30), wobei das besagte Signalisierungssignal der Kontrolle des Datenflusses Merkmale der Dauer und der Position in dem besagten zeitlichen Intervall hat, die für die Referenzausrüstung spezifisch sind.

7. Verfahren gemäß Anspruch 1 bis 6, **dadurch gekennzeichnet, dass** die Zahl (N) elementarer Daten, die für die Übertragung zusammengefasst werden, von einem Rahmen zum nächsten variabel ist.

8. Verfahren gemäß Anspruch 1 bis 7, **dadurch gekennzeichnet, dass** jedes der elementaren digitalen Signale einer Dateneinheit eine Dauer hat, die für die Referenzausrüstung spezifisch ist.

9. Verfahren gemäß Anspruch 1 bis 8, **dadurch gekennzeichnet, dass** die elementaren digitalen Signale einer Dateneinheit relative Positionen im Verhältnis zueinander haben, die für die Referenzausrüstung spezifisch sind.

10. Verfahren gemäß Anspruch 8 oder 9, **dadurch gekennzeichnet, dass** das Signal des digitalen Wertes "1" oder "0" der elementaren digitalen Signale einer Dateneinheit eine Position im zeitlichen Intervall hat, die für die Referenzausrüstung spezifisch ist.

## Claims

1. A method of transmitting data between reference equipment and follower equipment, such as a microcircuit card and a read/write terminal for the said card, **characterised in that** it comprises the following steps consisting of:
a) grouping together, in transmitting equipment, the elementary data of a message to be transmitted in the form of a series of at least one elementary data item consisting of a series (12) of elementary digital signals (b0, ... b7),
b) transmitting the said series (12) of elementary data to receiving computer equipment whilst causing it to be preceded by synchronisation signals (10) which, with the series of elementary data, constitute a frame (8), the duration and position characteristics of the elementary digital signals (b0, ... b7) of each elementary data item and of the synchronisation signals (20, 22, 24, 26) being specific to the reference equipment and are known to the follower equipment.

2. A method according to Claim 1, **characterised in that** it comprises an additional step consisting of:
(c) transmitting to the receiving equipment check signals for the data (14) transmitted which consist of elementary digital signals.

3. A method according to Claim 1 or 2, **characterised in that** it comprises the additional step consisting of:
- interrupting the transmission of the elementary digital signals for an interval of time or window (30) separating two consecutive elementary data items, the said time interval (30) having a duration which is specific to the reference computer equipment.

4. A method according to Claim 3, **characterised in that** it comprises the following additional step consisting of:
- transmitting for the said interval of time at least one signalling signal (32) indicating the end of transmission of the series of elementary data, the said signal signalling the end of transmission of the series of elementary data having characteristics of duration and position in the interval of time which are specific to the reference equipment.

5. A method according to Claim 3, **characterised in that** it comprises the following additional step consisting of:
- transmitting, during the said interval of time (30), a signalling signal (32) indicating the non-end of transmission of the series of elementary data, the said signal signalling non-end of transmission having characteristics of duration and position in the interval of time which are specific to the reference equipment.

6. A method according to Claim 3, **characterised in that** it comprises the following additional step consisting of:
- transmitting, during the said interval of time (30), from the receiving computer equipment to the transmitting computer equipment, a so-called data flow control signalling signal (40), the said data flow control signalling signal having characteristics of duration and position in the said interval of time which are specific to the reference equipment.

7. A method according to any one of Claims 1 to 6, **characterised in that** the number (N) of elementary data which are grouped together for the transmission is variable from one frame to the next.

8. A method according to any one of the preceding Claims 1 to 7, **characterised in that** each of the elementary digital signals of a data item has a duration which is specific to the reference equipment.

9. A method according to any one of the preceding Claims 1 to 8, **characterised in that** the elementary digital signals of a data item have relative positions with respect to each other which are specific to the reference equipment.

10. A method according to Claims 8 or 9, **characterised in that** the signal with the digital value "1" or "0" of the elementary digital signals of a data item has a position in the interval of time which is specific to the reference equipment.
